# EUROPEAN PATENT APPLICATION

(11) **EP 2 395 462 A1**
(43) Date of publication of application: **14.12.2011**
(21) Application number: 10165509.0
(22) Date of filing: 10.06.2010
(51) Int. Cl.: G06Q 10/00

(54) **Automated calendar reconciliation**

(71) Applicant: Research In Motion Limited, Waterloo, ON N2L 3W8 (CA)
(72) Inventor: Orr, Kevin Howard, Waterloo Ontario N2L 3W8 (CA); Legg, Daniel James, Waterloo Ontario N2L 3W8 (CA); Fyke, Steven Henry, Waterloo Ontario N2L 3W8 (CA); Dean, Edward Michael, Waterloo Ontario N2L 5Z5 (CA); Godfrey, James Andrew, Waterloo Ontario N2L 5Z5 (CA); Brown, Michael Stephen, Waterloo Ontario N2L 5Z5 (CA)
(74) Representative: Patel, Binesh

(57) **Abstract**

There is provided a computer implemented method of providing data reconciliation on a first delegate device associated with an assigned task. The method comprises the steps of: determining a likelihood of failure of the first delegate device associated with the task defined in a first data entry thereon to complete the task, the first data entry associated with a start time and a task location; determining a replacement delegate device for completing the task in response to detecting task information for the replacement delegate device indicating suitability for the task; and updating respective data entries for the first delegate device and the replacement delegate device to associate the replacement delegate device for the task.

## Description

### Field

The present matter relates to mobile communication devices, and more particularly to a method of providing automated calendar or task related data reconciliation based on real-time event information.

### Background

People often use calendar applications, such as personal information managers (PIMS), to keep organized. For example, a calendar application may be used to maintain or keep track of scheduled meetings or events. Additionally, tasks may be scheduled in the calendar application directly in a similar manner as appointments. Alternatively, a task manager within the calendar application may be used to manage to-do lists and other tasks provided either locally or externally to the task manager.

### Summary

Accordingly, there is a need for an automated system and method for reconciling calendar tasks assigned to a first task delegate (and corresponding delegate device) and determining a replacement task delegate (and corresponding replacement delegate device) for the task. In one aspect, there is provided a computer implemented method of providing data reconciliation on a first delegate device associated with an assigned task, the method comprising the steps of: determining a likelihood of failure of the first delegate device associated with the task defined in a first data entry thereon to complete the task, the first data entry associated with a start time and a task location; determining a replacement delegate device for completing the task in response to detecting task information for the replacement delegate device indicating suitability for the task; and updating respective data entries for the first delegate device and the replacement delegate device to associate the replacement delegate device for the task.

In another aspect, determining the likelihood of failure is in dependence upon receiving geographical positioning information and determining an estimated travel time of the first delegate device to the task location.

In another aspect, the task information of the replacement delegate device indicates a second data entry associated therewith to indicate availability at the start time. In another variation, determining the likelihood of failure in dependence upon the estimated travel time comprises: requesting an estimated travel time in dependence upon a determined geospatial location of the first delegate device and a determined geospatial location of the first data entry from a remote server; receiving the estimated travel time from the remote server in response to the request; and determining if the estimated travel time exceeds a predefined threshold for determining the likelihood of failure.

In yet another aspect, there is provided an electronic communication device for providing data reconciliation associated with an assigned task, the device comprising: a memory configured for storing a first data entry thereon associated with the task; a processor configured for: determining a likelihood of failure of the device associated with the task defined in the first data entry to complete the task, the first data entry associated with a start time and a task location; determining a replacement delegate device for completing the task in response to detecting task information for the replacement delegate device indicating suitability for the task; and updating respective data entries for the device and the replacement delegate device to associate the replacement delegate device for the task. The communication device may comprise a wireless mobile communication device. There is also provided a computer program product storing instructions and data to configure a processor to perform the method.

### Brief Description of the Drawings

In order that the subject matter may be readily understood, embodiments are illustrated by way of examples in the accompanying drawings, in which:
**Figure 1** is a block diagram illustrating a telecommunication infrastructure;
**Figure 2** is a block diagram illustrating components of a mobile device;
**Figure 3** depicts a day view of a calendar application on a mobile device;
**Figure 4** depicts an entry view of a calendar application on a mobile device ; and
**Figure 5** is a flow chart illustrating the process of providing calendar or task related data reconciliation associated with a task in accordance with an embodiment.

### Detailed Description

Accordingly, a method and system is provided herein for providing calendar and data reconciliation between a pre-defined group of mobile devices. Calendar appointments or calendar entries in personal information managers (PIMs) do not take into account whether the user who is delegated a task or a potential attendee at a meeting/event defined in the calendar entry will be able to or is unlikely to fulfill the assigned task. The presented method and system provides for determining a likelihood of failure of a first task delegate who is assigned a task in a calendar entry to complete a task. Based on a determination that the first task delegate is unlikely to be able to complete the assigned task, at least one substitute delegate within the pre-defined group of devices may be presented as a replacement. Further, respective calendars of the associated mobile devices are updated accordingly. As will be described, the determination that the first task delegate is unlikely to complete the assigned task may be based on a number of pre-defined criteria including one or more first task delegate's mobile device location, task location, estimated travel time to task location, estimated travel conditions, sensed motion from the first mobile device (also referred to as first delegate device) and/or user input indicating that a task assignee is unavailable for the task.

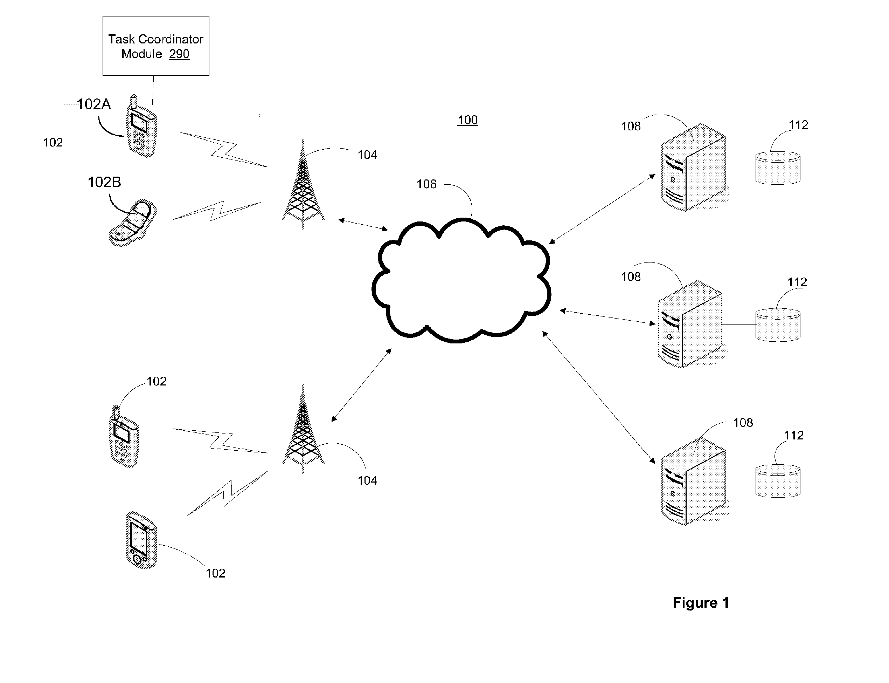

For convenience, like numerals in the description refer to like structures in the drawings. Referring to Figure 1, a typical telecommunication infrastructure is illustrated generally by numeral 100. The telecommunication infrastructure 100 includes a plurality of mobile devices 102, a plurality of base stations 104, a communication network 106, a plurality of network servers 108 and databases 112.

The mobile devices 102 include wireless computing devices such as a smart phone, a personal digital assistant (PDA), and the like. The mobile devices 102 are in communication with one of the base stations 104. The base stations relay data between the mobile devices 102 and the network servers 108 via the communication network 106. Accordingly, the communication network 106 may include several components such as a wireless network, a relay, a corporate server and/or a mobile data server for relaying data between the base stations 104 and the network servers 108.

The network servers 108 include servers such as a Web server, an application server 108, and an application server with web services. It will be appreciated by a person of ordinary skill in the art that the telecommunication infrastructure 100 described herein is exemplary and that changes may be made to one or more components to accommodate different network configurations without affecting the scope of the aspects described herein.

As will be described below, the communication system 100 is configured to allow calendar or task related data reconciliation of a calendar task defined in a calendar application of a first mobile device 102A. The first mobile device 102A is also referred to interchangeably herein as the first delegate device 102A. The calendar task may be assigned to a first task delegate (i.e. a user of the calendar application of the mobile device 102A). The reconciliation is initiated once a task coordinator module 290 provided by the mobile device 102A determines that the first task delegate of the first mobile device 102A (or the first delegate device 102A) is unable to attend to the assigned task. As will be described later, the determination may be based on a user input received on the first delegate device 102A indicating that the first task delegate is unavailable for the task. Alternatively, the determination that the first task delegate is unable to attend to the assigned task may be based on information gathered from the first delegate device 102A and/or remote servers 108. In yet a further aspect, the determination may be based on information gathered from the mobile device 102A and/or remote servers 108 and user input received on the first delegate device 102A. For example, the task coordinator module 290 may determine that the first task delegate is unlikely to complete a task and request user input from the first delegate device 102A to confirm. The first delegate device 102A is further configured to communicate with one or more other mobile device 102 and/or remote servers 108 for determining a replacement task delegate for performing the task. The replacement task delegate may be associated with a second mobile device 102B and have availability for taking on the task. It is noted that mobile devices 102A and 102B are referred to generally and interchangeably as mobile device 102 herein.

It will be appreciated by a person of ordinary skill in the art that the communication system 100 described herein is exemplary and that changes may be made to one or more components to accommodate different network configurations without affecting the scope of the disclosure herein. Further, although the present description specifically recites a communication device 102, it will be appreciated that other types of devices, including both wired and wireless devices, may be employed.

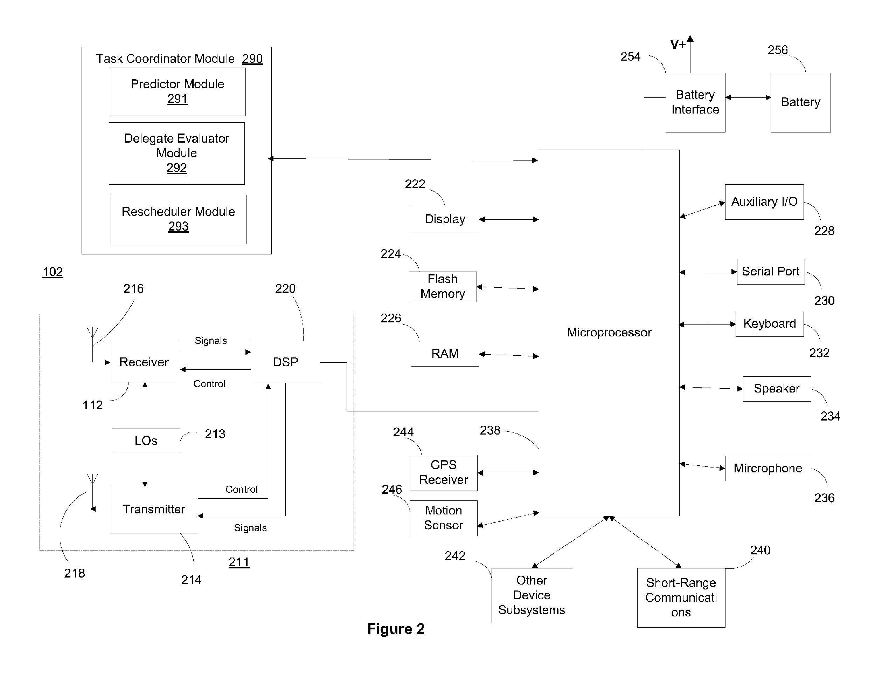

Referring to Figure 2, a typical mobile device 102 is illustrated in greater detail. The mobile device 102 is often a two-way communication device having both voice and data communication capabilities, including the capability to communicate with other computer systems. Depending on the functionality provided by the mobile device 102, it may be referred to as a data messaging device, a two-way pager, a cellular telephone with data messaging capabilities, a wireless Internet appliance, or a data communication device.

The mobile device 102 includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which mobile device 102 is intended to operate.

The mobile device 102 includes a microprocessor 238 which controls general operation of the mobile device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth™ for example, and any other device subsystems or peripheral devices generally designated at 242. The mobile device 102 may also include a positioning device 244, such as a GPS receiver, for receiving positioning information. The mobile device 102 may also include a motion sensor device 246, such as an accelerometer for detecting movement or acceleration of the device 102. An accelerometer is a sensor that converts acceleration from motion (such as tilt, inertial or vibration) or gravity into an electrical signal for providing a corresponding output. For example, for measuring tilt, the accelerometer sensor measures static acceleration. Accelerometer outputs may be calibrated to compensate for individual axis offset and sensitivity variations. According to one aspect, the accelerometer data from sensor 246 may be used to determine if the mobile device 102 is moving (i.e. even if moving within a building) to help to determine the likelihood that the user of the device 102 will reach a task location and complete the task.

It will be understood that an accelerometer is one example of a motion sensing device 246. Other types of motion sensors 246 may be envisaged for detecting movement of the device 102. One example is a camera and associated sensors located in the mobile device may be used as the motion sensor 246.

As will be described, the data from the motion sensor 246 may be used in combination with the GPS 246 data to determine movement of the mobile device 102 towards a specific location or direction. Accordingly, in one aspect, this information is used to determine whether the first task delegate is likely to complete a task at a pre-defined task location.

Referring again to Figure 2, operating system software used by the microprocessor 238 may be stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, enables execution of software applications on the mobile device 102. A predetermined set of applications, which control basic device operations, is installed on the mobile device 102 during its manufacture. These basic operations typically include data and voice communication applications, for example. Additionally, applications may also be loaded onto the mobile device 102 through the network 106, an auxiliary I/O subsystem 228, serial port 230, short-range communications subsystem 240, or any other suitable subsystem 242, and installed by a user in RAM 226, or the persistent store 224, for execution by the microprocessor 238. Such flexibility in application installation increases the functionality of the mobile device 102 and may provide enhanced on-device features, communication-related features, or both.

The display 222 is used to visually present an application's graphical user interface (GUI) to the user. The user can manipulate application data by modifying information on the GUI using an input device such as the keyboard 232 for example. Depending on the type of mobile device 102, the user may have access to other types of input devices, such as, for example, a scroll wheel, trackball, light pen or touch sensitive screen.

Location-based applications executing on the mobile device 102 use positioning information from the positioning device 244 to provide relevant information to the user, often in real-time. The positioning device 244 may be a GPS receiver for receiving satellite broadcasts. In one embodiment, the satellite broadcast data is used by the mobile device 102 to determine its position. In another embodiment, the satellite broadcast data is transmitted from the mobile device 102 to one of the network servers 108 to determine the position of the mobile device 102.

Alternatively, the positioning device 244 may be a positioning module for receiving positioning information from one of the network servers 108. In this embodiment, the positioning module may comprise a software, rather than a hardware, solution.

For example, other forms of location detection for the mobile device 102 may be envisaged as provided by the positioning device 244 and/or remote servers 108. These can include wireless communication subsystems RSSI (received signal strength indicator); cellular communication subsystems (for determining cell location of the device 102 in the network); short range communication subsystems (e.g. mobile device 102 connected to a car kit and using Blue Tooth communications); NFC or near field communications transactions (e.g. using the mobile device 102 to purchase an item at a certain location) or location detection via WIFI access point.

A personal information manager (PIM), such as a calendar application, may be operating on the mobile device 102.

Referring again to Figure 2, the mobile device 102 further comprises a task coordinator module 290. The task coordinator module 290 is configured for coordinating and updating task related data entries on the mobile device 102 (i.e. on each of device 102A and 102B) in response to communications with remote servers 108, databases 112 and/or other mobile devices 102. That is, the task coordinator module 290 may be configured to create and/or modify respective data entries on one or both of the first mobile device 102A (first delegate device 102A) and the second mobile device 102B (second delegate device 102B) to assign and associate the replacement delegate device 102B with the task (associated with a start time, a task location and other task criteria) that was originally assigned to the first delegate device 102A. The task coordinator module 290 is in communication with the calendar application operating on the mobile devices 102. The task coordinator module 290 comprises a task predictor module 291, a delegate evaluator module 292, and a rescheduler module 293.

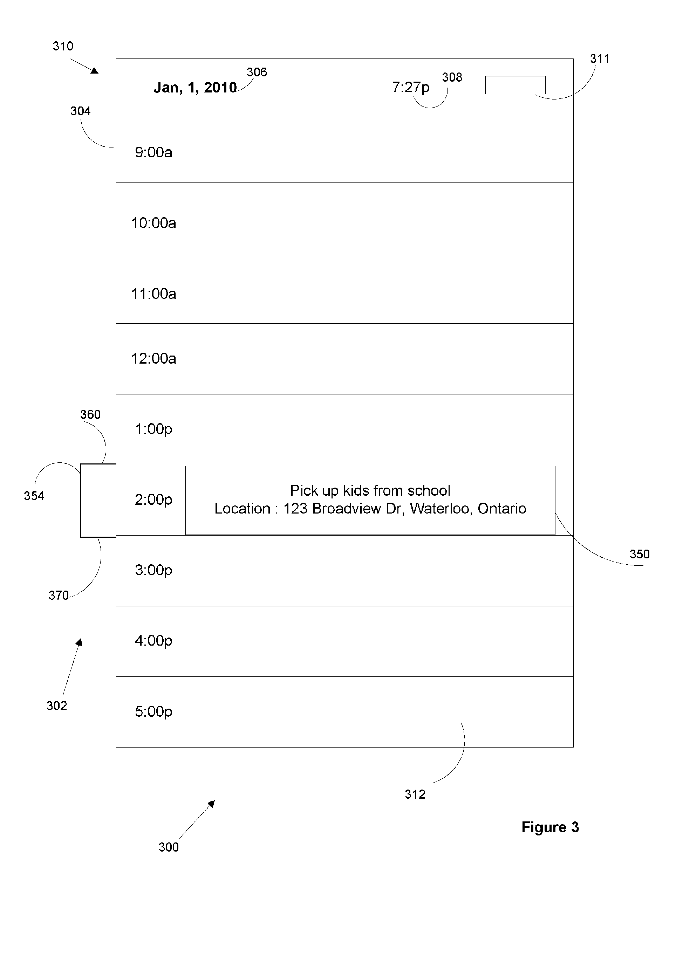

As will be described in reference to Figure 3, a calendar or task related data entry on the mobile device 102 indicates a task designated for completion by a user (also referred to as a first task delegate) of the mobile device 102. As will be understood by a person skilled in the art, a calendar task or data entry or task related data entry as described herein is used generally to include any one of scheduled tasks, appointments, meetings, and any other types of scheduled events for completion and/or attendance by the first task delegate. That is, as will be understood by a person skilled in the art, the tasks may be defined in a task manager of the calendar applications or they may include calendar appointments or events defined in the calendar application.

The task coordinator module 290 is then configured for determining and/or forecasting when the first task delegate of a first delegate device 102A is unable to meet the task requirements defined in the calendar entry of the first delegate device 102A and to find one or more replacement task delegates for the task in response to calendar information received directly or indirectly from other mobile devices 102 (potential delegate devices 102). The task information received from a replacement delegate device 102B indicates suitability of the replacement delegate device 102B (and its user(s)) for the task. For example, the task information may indicate availability of a potential task delegate associated therewith (with the potential delegate device 102) to perform the task. That is, a user of the replacement delegate device 102B can have task information indicating that they are available for taking on a specific task (i.e. previously assigned to the first delegate device 102A) depending on the time and date of the task to be assigned.

Referring again to Figure 2, the task predictor module 291 is configured for requesting and receiving information to indicate whether the first task delegate will be able to complete a task defined in a first calendar or data entry on the first delegate device 102A. As will be described in reference to Figure 3, each task defined in a calendar entry of the first delegate device 102A is associated with at least a start time and a task location.

The determination that the first task delegate is unlikely to fulfill a designated task as made by the predictor module 291 may be automated (i.e. based on task information received from at least one of the GPS receiver 244 and the motion sensor 246 and/or location information from remote servers 108) or semi-automated (i.e. based on the task information from the mobile device 102A and/or remote servers 108 in addition to user input from the first task delegate indicating unavailability to complete a task) or user-defined (the predictor module 291 requesting confirmation from the user of 102A for accepting the task within a pre-defined time prior to the task start time). In one embodiment, the task predictor module 291 determines that the first task delegate is unable to complete the task by receiving an input from a user of the first delegate device 102A (i.e. as received on the user interface of the first delegate device 102A) indicating same. For example, a user may be presented with a reminder regarding an upcoming task on the display 222. In response, the user of the first delegate device 102A also known as the first task delegate herein may decline the task such that the calendar application provides notification to the task predictor module 291 of said response.

Alternatively, the task predictor module 291 may receive task information such as positioning information indicating that the first task delegate is unlikely to be able to complete the task. Such positioning information may include receiving location information and/or travel route information from the GPS receiver 244 of the first delegate device 102A and determining an estimated travel time of the first delegate device 102A to the task location provided in the first calendar or data entry.

In one aspect, the estimated travel time is further in dependence upon receiving speed information regarding the mobile device 102A from the GPS receiver 244. If the estimated travel time of the first delegate device 102A to the task location exceeds a predetermined threshold, the predictor module 291 determines that the first task delegate is unlikely to complete the task and thus a replacement delegate corresponding to a replacement delegate device 102B should be found.

In a further embodiment, the mobile device 102 may further receive task information such as motion information from the motion sensor 246 of the mobile device 102A such as the accelerometer and the estimated travel time of the mobile device 102 to the task location may be in further dependence upon receiving the motion information.

In accordance with the present embodiment positioning information from the GPS receiver 244 is combined with motion or acceleration information provided by the motion sensor 246 to determine estimated travel time of the mobile device 102A to the task location and to determine a likelihood of task completion by the first task delegate.

Referring again to Figure 2, the delegate evaluator module 292 may be configured for determining a replacement task delegate associated with a replacement delegate device (i.e. mobile device 102B) for completing the task in response to task information for the replacement delegate device 102B. The task information for the replacement delegate device 102B indicating the suitability and/or eligibility of the replacement delegate device 102B for performing the task and meeting one or more criteria defined by the task. First, the delegate evaluator module 292 may be configured to receive task information for other mobile devices 102 to indicate their availability for completing the task. The task information for the replacement delegate device 102B may be provided by the first delegate device 102A polling other mobile devices 102 and/or received from the remote servers 108 for determining potential candidates for replacing the first task delegate in performing the task. The task information can include calendar availability information associated with each mobile device 102 indicating availability of each potential other task delegate device for performing the task at the pre-defined start time of the task.

In one aspect, the delegate evaluator module 292 may further be configured to request at least one of eligibility information, travel conditions, and potential estimated travel times for each potential task delegate for completing the task. This information relating to each potential task delegate may be retrieved by polling the corresponding mobile device (i.e. replacement delegate device 102B) and/or received from the remote servers 108 which may be configured to retrieve and store the information in databases 112 for subsequent retrieval therefrom.

The eligibility information may provide profile information for each potential task delegate associated with other mobile devices 102 and define for example, whether a potential task delegate is suitable or eligible for performing the desired task and replacing the first delegate. For example, if the task involves driving to a certain location to attend an event or a meeting, the eligibility information may provide information as to whether the potential task delegate is able to drive and/or has a valid driver's license and/or has access to a vehicle.

The travel conditions may include for example traffic conditions and/or weather conditions that are associated with the task location and/or a predefined travel route. The predefined travel route is a route from a geospatial location of the potential delegate's mobile device 102 (i.e. mobile device 102B) and the task location. Accordingly, the travel conditions may indicate the likelihood of the potential delegate for reaching the task location and completing the task.

Algorithms for estimating or determining optimal or near-optimal routes between two locations from a finite number of routes given the travel time across at least one segment of a route are familiar to a person of ordinary skill in the art and may be used to determine the travel conditions of the optimal routes for travel between the potential delegate's mobile device and the task location.

In one embodiment, the delegate evaluator module 292 is provided on a remote server 108 and is in communication with the first delegate device 102A. In the present embodiment, the delegate evaluator module 292 on the remote server 108 determines one or more potential task delegates and presents same to the first delegate device 102A. As described above, the delegate evaluator module 292 is configured for requesting and receiving one or more of calendar availability information indicating availability of a potential task delegate for the task; eligibility information; travel conditions (including traffic conditions and/or weather conditions); and potential estimated travel time for the potential task delegate to the task location for determining a replacement task delegate for the task. Since more than one potential task delegate associated with a mobile device 102 may be available and eligible for completing the task, it may be desirable to determine the most suitable task delegate according to pre-defined rules. Accordingly, the delegate evaluator module 292 may further be configured for ranking all available potential delegates based upon at least one of eligibility information, travel conditions, potential estimated travel time and in accordance with one or more pre-defined rules. For example, the pre-defined rules may define the weighting or importance of the criteria relative to one another. In accordance with one embodiment, the delegate evaluator module 292 may be further configured to determine an availability score which defines the suitability of each potential delegate relative to one another according to pre-defined criteria such as eligibility information, travel conditions, and potential estimated travel time. The delegate evaluator module 292 may further be configured to provide the availability score to the first delegate device 102A for selecting a replacement delegate and corresponding replacement delegate device from the potential task delegate devices.

In another embodiment, the potential task delegates are pre-selected by a user of the mobile device 102A being associate with the task. In this embodiment, once it is determined that the first task delegate is unlikely to attend to the task (as determined by the predictor module 291), the delegate evaluator module 292 polls the pre-selected potential delegates to obtain task information for determining their suitability for completing the task. One or more suitable potential delegates are determined by the evaluator module 292 and presented to the rescheduler module 293.

The delegate evaluator module 292 is either located locally on the mobile device 102A or on the remote server 108 and may be configured to present a replacement task delegate selected from the potential task delegates according to the pre-defined criteria. Alternately, the delegate evaluator module 292 may be configured to present on the user interface of the mobile device 102A a number of potential task delegates and their availability score for selection of the replacement task delegate by a user of the device 102A.

Referring again to Figure 2, the rescheduler module 293 is configured for updating respective calendar information or task related data entries for the first task delegate device and the replacement task delegate device to associate the replacement task delegate device for the task. That is, in one embodiment, the rescheduler module 293 replaces the first task delegate associated with a first calendar or data entry and the task on the first delegate device 102A to the replacement task delegate associated with the replacement delegate device 102B. Alternately, the rescheduler module 293 may remove the first calendar or data entry and send the task information to the replacement delegate device 102B for insertion thereof as a second calendar or data entry associated with the user of the replacement delegate device 102B (replacement delegate device 102B). In one embodiment, the rescheduler module 293 may further be configured for sending a notification to the replacement delegate device 102B requesting confirmation that the replacement task delegate will accept the task. Once confirmation is received, the rescheduler module 293 provides notification of the updated task assignment to the first task delegate on the display 222.

In the embodiment shown in Figure 2, the task coordinator module 290 is provided by the mobile device 102. In an alternative embodiment, one or more components of the task coordinator module 290 may be provided by the remote server(s) 108.

As will be understood by a person skilled in the art, the task coordinator module 290 may be a software solution that is included as part of the operating system or as an application of the communication device 102 (which is in communication with the calendar application). In another embodiment, the task coordinator module 290 may be part of any one of a calendar application, a task application, a messaging application or any combinations of such.

An example scenario depicting the functionality of the task coordinator module 290 is as follows. A group of mobile devices 102 is defined as a peer group of devices (i.e. mobile devices 102 in Figure 1) for performing calendar and task related data reconciliation thereon. The group of devices 102, may for example be connected to one or more enterprise servers 108. A first delegate device 102A contains a calendar or data entry defining a task for a first task delegate including a start time, and a task location. In one case, the first task delegate may be presented with a reminder of the task. The user of the first delegate device 102A may reject the task and thus a notification is provided by the task coordinator module 290 to determine a substitute delegate from the peer group of devices 102. Alternatively, the predictor module 291 may be configured to determine whether the first task delegate is likely to complete the assigned task (i.e. based on GPS positioning information 244, and/or motion sensor 246 such as accelerometer reading from the mobile device 102A and estimated travel time to the task location). If it is determined that the first task delegate is unlikely to complete the task, a substitute delegate is found. That is, the delegate evaluator module 292 can query other mobile devices 102 to determine whether they meet pre-defined criteria for the task. This includes task information comprising eligibility information to indicate whether the potential task delegate is suitable for the task. Other information may also be retrieved regarding potential task delegates (such as their potential estimated travel time to the task location, the travel condition for their potential travel to the task location) from their mobile devices 102 and/or the remote servers 108. For example, if the task involves a first task delegate "Dad" to pick up their child then the potential other task delegates (i.e. other designated members) should be able to drive (i.e. as defined in the eligibility information) and have an available time slot in their calendar or task related data entries for the start time of the task.

The potential task delegates (also referred to as potential replacement delegates) meeting the pre-defined criteria are then evaluated by the delegate evaluator module 292 to prioritize the ordering of the potential task delegates in order of suitability for the task. The delegate evaluator module 292 may then present a replacement task delegate (i.e. associated with a replacement delegate device 102B) to a user of the first delegate device 102A. Alternatively, the delegate evaluator module 292 presents a number of potential replacement delegates meeting the pre-defined criteria for the task such that a user of the mobile devices 102A (the first task delegate) can select a replacement delegate. It is noted that in a networked environment, such as that shown in Figure 1, one or more servers 108 may be configured for retaining task information for the mobile devices 102 such that the task information may be provided directly to the first delegate device 102A without polling each device 102.

Figure 3 depicts a day view 300 of a graphical user interface of a calendar application operating on a first delegate device 102A. The day view 300 shows a first calendar entry (e.g. 350) for a particular day and associated with a particular user (i.e. the first task delegate assigned the task in element 350). As described earlier, the task may be defined as a calendar entry in a calendar (such as an appointment or a meeting) or as a task within the task application of the first delegate device 102A.

The day view 300 may have a table with time slots between rows 302, each row representing a time of day 304 (e.g. 9:00 am). There may be indicators along the top edge 310 of the day view, such as the present date 306 ("Jan 1, 2010"), the present time 308 ("7:27 p") and the day of the week 311.

Calendar also referred to as task related data or data entries (i.e. element 350) may be visible in the day view. For example, the subject of a calendar entry 350 (e.g. "Pick up kids from school") and other details such as the location of the task (e.g. "123 Broadview Dr, Waterloo, Ontario) may be displayed in a time slot 312. There may also be a calendar entry 350 duration indicator 354 showing the start time 360 and end time 370 of the calendar entry 350.

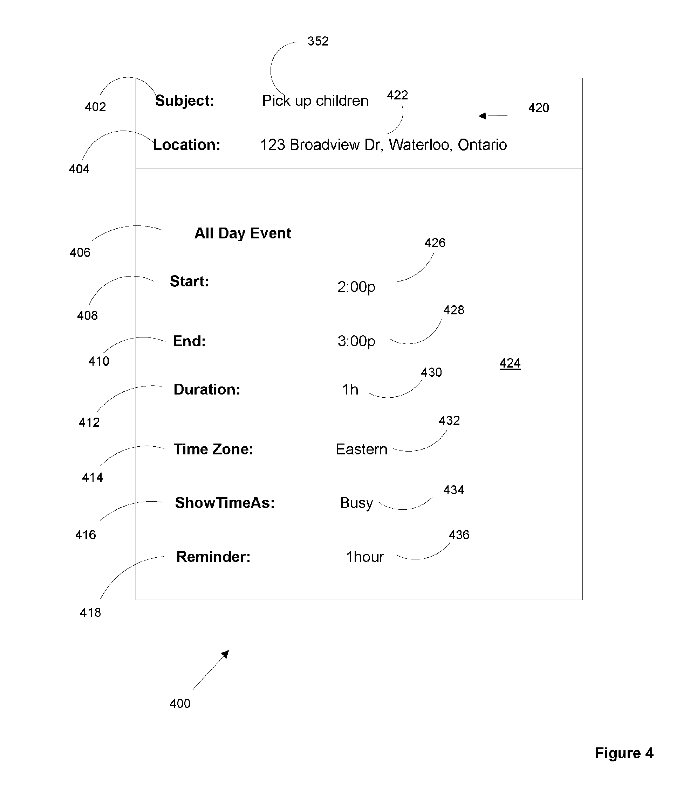

Figure 4 shows a calendar entry view 400 of the calendar application. The calendar entry view 400 shows the details (i.e. specific calendar entry data indicating the task to be performed) of a single calendar entry 350 displayed in the calendar day view 300.

The calendar entry view 400 has a top portion 420 displaying fields for subject 402 and location 404. The subject field 402 may contain a subject entry 352 (such as "Pick up children"). The location 404 field may contain a geospatial location entry 422 (such as "123 Broadview Dr. Waterloo, Ontario"). The geospatial location entry 422 may be an address (e.g. a street address) and/or may contain latitudinal and longitudinal coordinates. Further, a GPS associated with the device 102 may calculate and/or provide the coordinates (i.e. latitudinal and longitudinal coordinates) for a given address (e.g. a street address). Thus, the coordinates of an address entered into the location 404 field may be determined by the mobile device 102 (e.g. using an internal GPS) and stored in memory of the device 102 as the task location. The task location may then be used by the task coordinator module 290 for determining whether the first task delegate who is assigned the task (defined in calendar entry 350) will be able to reach the task location by the desired start time 408.

The middle portion 424 of the calendar entry view 400 has a number of fields listed in rows. The all day event field 406 may have a check-box indicating with a check or cross, for example, whether the respective calendar entry 350 will occur throughout the entire day. The start field 408 may have an entry 428 indicating the start time of the calendar entry 350 and of the assigned task (such as "2:00p"). Similarly the end field 410 may have an entry 430 indicating the ending time of the calendar entry 350 (such as "3:00p") and of the assigned task.

The duration field 412 may have an entry 430 indicating the duration of the calendar entry 350 (such as "1h", or one hour). This may indicate for example, the amount of time required to complete the task (i.e. 1 hour to pick up kids from school and take them home). The time zone field 414 may have an entry indicating the applicable time zone (such as "Eastern"). The show-time-as field 416 may have an entry indicating whether the user's time for the duration of the respective calendar entry is busy, free, tentative, out of office, etc.

There may be a reminder field 418 for which there may be a selection of time durations 436 (such as "1 hour"). This time duration indicates the amount of time before the starting time of the calendar entry 428 when an audible, tactile and/or visual alarm will sound or emit. This reminder may include a request for confirmation from the user that the user (i.e. first task delegate) will be able to complete the task.

The information displayed next to or in association with each field may be manually entered (e.g. using a keypad, roller ball or touchscreen) or automatically entered (e.g. after being processed). The calendar events (e.g. items) may be synchronized with a calendar on a remote server (e.g. an enterprise server). For example, in a socially networked environment such as an office, the task coordinator module 290 associated with a calendar application of a mobile device 102 may communicate with the remote server 108 (i.e. the enterprise server) to determine the calendar availability and other calendar information or task related information of other mobile devices 102.

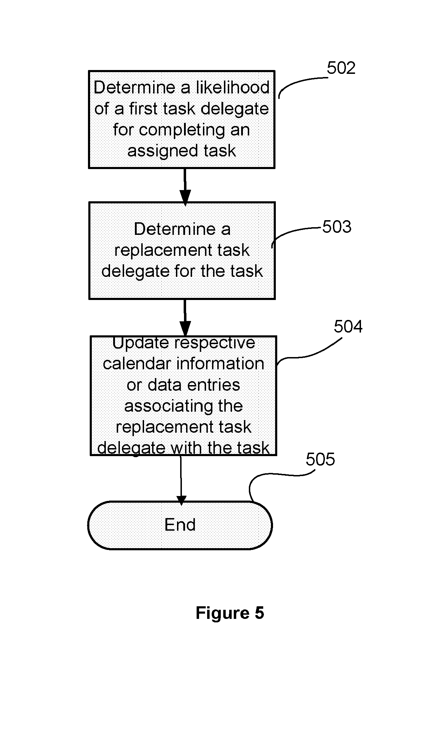

A method of providing calendar or data reconciliation and task coordination among a group of mobile devices 102 is shown in Figure 5.

At step 502, the likelihood of completing a task assigned to a first delegate device 102A is determined. The task is defined in a calendar entry of a calendar application for the first delegate device 102A. The calendar entry has a start time 360 and an end time 370. As described above, the determination may be based on one or more of user input, GPS information (such as location of the first delegate device 102A as compared to the geospatial location of the calendar entry (i.e. task location 422)), and motion sensor 246 information used to indicate whether the first delegate device 102A is moving (detect acceleration) and/or direction of movement. In this way, at least one of the GPS 244 information and the motion sensor 246 information can be used to estimate the travel time for the first delegate device 102A to reach the task location. For example, in one scenario the GPS 244 information provides positioning information and/or travel route information for determining whether the first task delegate will be able to reach the task location and complete the task. In another example, the motion sensor 246 information (i.e. where the first task delegate is located inside a building such that the GPS location isn't changing) is used to detect that the first task delegate (i.e. the first delegate device 102A) is moving and therefore determine likelihood for attending to the task. For example, the motion sensor 246 detects that the user (the first delegate device 102A) is still in a meeting at a distant location from the task location (determined by the GPS 244) close to the task start time and therefore unlikely to attend to the task. In this way, the motion sensor 246 can act as a pre-emptive indicator for whether the first delegate device 102A is likely to complete the task. In one aspect, the location data 422 may be linked to a map in the memory of the device, for example, so that the mobile device 102 can maintain information regarding the geospatial location of the calendar entry.

At step 503, the delegate evaluator module 292 determines a replacement task delegate for the task. The replacement task delegate (and corresponding replacement delegate device) may be selected from a number of potential task delegates (and corresponding potential task delegate devices) in response to requesting and receiving task information indicating suitability or eligibility of the potential task delegates (and potential task delegate devices) for the task. The potential task delegates may be evaluated using a number of pre-defined criteria such as: calendar availability, eligibility information (i.e. qualification of the potential task delegate to perform the task), travel conditions (i.e. weather and traffic conditions), and potential estimated travel times for the potential task delegates to reach the task location (i.e. a geospatial distance of the mobile device 102 associated with the potential task delegate and the geospatial location of the task). The replacement task delegate may then be selected from the potential task delegates in accordance with predetermined rules and/or user input.

At step 504, respective calendar information (respective task related data entries) associating the replacement task delegate with the task is updated and resulting calendar entries depicting the task and the new assignment may be presented to the mobile devices (102A and/or 102B).

One or more embodiments have been described by way of example. It will be apparent to persons skilled in the art that a number of variations and modifications can be made without departing from the scope of what is defined in the claims.

## Claims

1. A computer implemented method of providing data reconciliation on a first delegate device (102A) associated with an assigned task, the method comprising the steps of:
determining (502) a likelihood of failure of the first delegate device (102A) associated with the task defined in a first data entry (350) thereon to complete the task, the first data entry (350) associated with a start time (360) and a task location (404);
determining (503) a replacement delegate device (102B) for completing the task in response to detecting task information for the replacement delegate device (102B) indicating suitability for the task; and
updating respective data entries (504) for the first delegate device (102A) and the replacement delegate device (102B) to associate the replacement delegate device (102B) for the task.

2. The method of claim 1, wherein determining the likelihood of failure is in dependence upon receiving geographical positioning information and determining an estimated travel time of the first delegate device (102A) to the task location (404).

3. The method of any one of claims 1 to 2, wherein the task information of the replacement delegate device (102B) indicates a second data entry associated therewith to indicate availability at the start time(360).

4. The method of any one of claims 2 to 3, wherein determining the likelihood of failure in dependence upon the estimated travel time comprises:
requesting an estimated travel time in dependence upon a determined geospatial location of the first delegate device (102A) and a determined geospatial location of the first data entry (350) from a remote server (108);
receiving the estimated travel time from the remote server (108) in response to the request; and
determining if the estimated travel time exceeds a predefined threshold for determining the likelihood of failure.

5. The method of any one of claims 3 to 4, wherein determining a replacement delegate device (102B) comprises:
requesting availability information associated with each mobile device (102) within a defined group of devices for the start time of the task (360), each availability information indicating an availability of a potential delegate device;
requesting at least one of eligibility information, travel conditions, and potential estimated travel time for each potential delegate device for completing the task; and
selecting the replacement delegate device (102B) from the potential delegate devices in dependence upon at least one of eligibility information, travel conditions, and potential estimated travel time.

6. The method of any one of claims 2 to 5, wherein determining the likelihood of failure is in further dependence upon a determined motion sensor (246) reading on the first delegate device (102A) for detecting movement thereof.

7. The method of claim 5, wherein the travel conditions comprises at least one of: traffic conditions and weather conditions associated with at least one of the task location (404) and a predefined travel route from a geospatial location of the corresponding potential delegate device and the task location (404).

8. The method of any one of claims 5 to 7 wherein selecting the replacement delegate device (102B) from the potential delegate devices further comprises ranking the potential delegate devices in dependence upon at least one of eligibility information, travel conditions, and potential estimated travel time, said ranking in accordance with a predetermined rule.

9. The method of any one of claims 5 to 8, wherein each of the eligibility information, the availability information, the travel conditions, and potential estimated travel time is received from one of the group devices and a remote server (108).

10. The method of any one of claims 5 to 9, further comprising: presenting identification of each potential delegate device on the first delegate device (102A), and receiving an input on a user interface of the first delegate device (102A) for selecting the replacement delegate device (102B).

11. The method of any one of claims 1 to 10, wherein determining the likelihood of failure for completing the task is further responsive to receiving an input on a user interface of the first delegate device (102A) indicating unavailability for completing the task.

12. The method according to any one of claims 1 to 11, wherein determining the likelihood of failure is further in response to receiving at least one of positioning information from a GPS receiver (244) and sensed motion information from a motion sensor (246) of the first delegate device (102A).

13. A computer program product storing instructions and data to configure a processor to perform the method of any one of claims 1 to 12.

14. An electronic communication device for providing data reconciliation associated with an assigned task, the device comprising:
a memory configured for storing a first data entry (350) thereon associated with the task;
a processor configured for performing a method in accordance with any one of claims 1 to 12.

## Amended claims

### Amended claims in accordance with Rule 137(2) EPC.

**1.** A computer implemented method of providing data reconciliation on a first delegate device (102A) associated with an assigned task, the method comprising the steps of:
determining (502) a likelihood of failure of a first delegate associated with the first delegate device (102A) having the task defined in a first data entry (350) thereon to complete the task, the first data entry (350) associated with a start time (360) and a task location (404) such that determining the likelihood of failure is in dependence upon receiving geographical positioning information and determining an estimated travel time of the first delegate device (102A) to the task location (404);
determining (503) a replacement delegate device (102B) for completing the task in response to detecting task information for the replacement delegate device (102B) indicating suitability for the task; and
updating respective data entries (504) for the first delegate device (102A) and the replacement delegate device (102B) to associate the replacement delegate device (102B) for the task.

**2.** The method of claim 1, wherein the task information of the replacement delegate device (102B) indicates a second data entry associated therewith to indicate availability at the start time(360).

**3.** The method of claim 2, wherein determining the likelihood of failure in dependence upon the estimated travel time comprises:
requesting an estimated travel time in dependence upon a determined geospatial location of the first delegate device (102A) and a determined geospatial location of the first data entry (350) from a remote server (108);
receiving the estimated travel time from the remote server (108) in response to the request; and
determining if the estimated travel time exceeds a predefined threshold for determining the likelihood of failure.

**4.** The method of claim 3, wherein determining a replacement delegate device (102B) comprises:
requesting availability information associated with each mobile device (102) within a defined group of devices for the start time of the task (360), each availability information indicating an availability of a potential delegate device;
requesting at least one of eligibility information, travel conditions, and potential estimated travel time for each potential delegate device for completing the task; and
selecting the replacement delegate device (102B) from the potential delegate devices in dependence upon at least one of eligibility information, travel conditions, and potential estimated travel time.

**5.** The method of any one of claims 1 to 4, wherein determining the likelihood of failure is in further dependence upon a determined motion sensor (246) reading on the first delegate device (102A) for detecting movement thereof.

**6.** The method of claim 4, wherein the travel conditions comprises at least one of: traffic conditions and weather conditions associated with at least one of the task location (404) and a predefined travel route from a geospatial location of the corresponding potential delegate device and the task location (404).

**7.** The method of any one of claims 4 to 6 wherein selecting the replacement delegate device (102B) from the potential delegate devices further comprises ranking the potential delegate devices in dependence upon at least one of eligibility information, travel conditions, and potential estimated travel time, said ranking in accordance with a predetermined rule.

**8.** The method of any one of claims 4 to 7, wherein each of the eligibility information, the availability information, the travel conditions, and potential estimated travel time is received from one of the group devices and a remote server (108).

**9.** The method of any one of claims 4 to 8, further comprising: presenting identification of each potential delegate device on the first delegate device (102A), and receiving an input on a user interface of the first delegate device (102A) for selecting the replacement delegate device (102B).

**10.** The method of any one of claims 1 to 9, wherein determining the likelihood of failure for completing the task is further responsive to receiving an input on a user interface of the first delegate device (102A) indicating unavailability for completing the task.

**11.** The method according to any one of claims 1 to 10, wherein determining the likelihood of failure is further in response to receiving at least one of positioning information from a GPS receiver (244) and sensed motion information from a motion sensor (246) of the first delegate device (102A).

**12.** A computer program product storing instructions and data to configure a processor to perform the method of any one of claims 1 to 11.

**13.** An electronic communication device for providing data reconciliation associated with an assigned task, the device comprising:
a memory configured for storing a first data entry (350) thereon associated with the task;
a processor configured for performing a method in accordance with any one of claims 1 to 11.
